# EUROPEAN PATENT APPLICATION

(11) **EP 3 493 346 A1**
(43) Date of publication of application: **05.06.2019**
(21) Application number: 17382816.1
(22) Date of filing: 01.12.2017
(51) Int. Cl.: H02J 3/00

(54) **A RELIABILITY EVALUATION METHOD, AND A SYSTEM, OF NODES IN A PEER-TO-PEER DISTRIBUTED ENERGY NETWORK**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES); García Mendoza-Sanchez, Armando Antonio, 28013 Madrid (ES); Pilaszanovich, Jakab, 28013 Madrid (ES)
(74) Representative: Carlos Hernando, Borja

(57) **Abstract**

The method comprising tracking, by a computer system operatively connected with an energy controller located in a given node of an energy network, information about the given node including an amount of electrical energy flowing through said given node and electrical energy transactions of said given node with neighbor nodes; tracking, by said computer system operatively connected with energy controllers located in said neighbor nodes of the given node, information about the neighbor nodes including an amount of electrical energy flowing through each neighbor node and electrical energy transactions of each neighbor node with their neighbor nodes; and determining a reliability estimation of the given node by using the tracked information and by computing a reliability vector comprising two components, a first component relating to quality of hardware elements used in the given node and a second component relating to use made of the electrical energy by the given node.

## Description

### Field of the invention

The present invention generally relates to distributed energy networks. In particular, present invention relates to a method, and to a system, for reliability evaluation of nodes in a peer-to-peer distributed energy network, in which said energy network is adapted for the distribution of electrical energy, i.e. the nodes included in the energy network are connected in such a way that electrical energy can flow among them.

### Background of the invention

There are two main network architectures employed today for electrical energy (or electricity) generation and distribution. The first and most common is a centralized, hierarchical architecture in which the generation and distribution channels are owned, installed, configured, and maintained by a central authority for a fee. This architecture applies both to the conventional electricity grid as well as microgrid deployed in developing communities, or other locations where access to the traditional grid is unavailable. The other architecture comprises stand-alone systems, such as home solar systems connected to batteries and appliances in an individual home. In that case, the equipment is typically owned (or perhaps leased) by the homeowner and can be installed and maintained by the owner or by the equipment provider (for a fee).

An emerging architecture connects many homes in a peer-to-peer energy network. In this situation, it is likely that the equipment is owned, installed, configured, and managed by the homeowner. Unlike in the stand-alone case, where if owners fail to maintain their systems, they are the only ones impacted, in the networked system, trading partners are affected by the maintenance and configuration of an owner's system. Therefore, understanding the reliability of both the hardware and the users is important for a peer-to-peer energy network. There has been much work to estimate reliability of actors in other types of peer-to-peer networks (e.g. file sharing), but it has not yet been applied to energy networks.

Smart grids provide a digital infrastructure over the traditional grid. Smart meters and smart sensors give insights on usage patterns.

Energy distribution/routing is seen as an enabling technology needed for implementing reliability evaluation on the ad hoc networks proposed by this technology. It has developed and continues to be the technological focus of patenting. The present invention will make use of third party concepts, products and services, mostly on DC power routing.

Document 'STAR : Semiring Trust Inference for Trust - Aware Social recommenders' Gao Peixin et al. 10th ACM Conference on Recommender Systems, pp. 301-308 offers a new solution to trust inference in social networks to provide a better knowledge base for trust-aware recommender systems. The document uses a semi-ring framework as a nonlinear way to combine trust evidences for inferring trust, where trust relationships are represented by 2-D vectors. The trust propagation and aggregation rules, as the building blocks of the trust inference scheme, are based upon the properties of trust relationships. Both trust and distrust (i.e., positive and negative trust) are considered, and opinion conflict resolution is supported.

Document 'The eigentrust algorithm for reputation management in p2p networks' Kamvar, S.D. et al. Proceedings of the 12th international conference on World Wide Web. Retrieved 5 July 2015 discloses an EigenTrust algorithm as a reputation management algorithm for peer-to-peer networks. The algorithm provides each peer in the network a unique global trust value based on the peer's history of uploads and thus aims to reduce the number of inauthentic files in a P2P network.

However, existing solutions fail to capture the important, unique aspects of energy trading, from the perspective of equipment up-time, payments, theft, or other effects of user or equipment misbehavior or unreliability.

More solutions are therefore needed for reliability evaluation of decentralized energy distributions, especially in cases in which individuals install and configure their own system and then connect them to others to trade electrical energy, to maintain quality of service, and at the same time giving an opportunity to categorize, rank and evaluate both the physical infrastructure of the energy network and the reliability of users.

### Description of the Invention

Embodiments of the present invention provide according to an aspect a reliability evaluation method of nodes in a peer-to-peer distributed energy network, wherein said energy network being adapted for the distribution of electrical energy and comprising a plurality of nodes (e.g. a home), and wherein each node comprising one or more devices including electrical energy loads, e.g. home appliances, refrigerator and/or heating systems, lights, etc.

The proposed method comprises a) tracking, by a computer system operatively connected, physically or wirelessly, with an energy controller located in a given node of the energy network, information about the given node, said information including an amount of electrical energy flowing through said given node and electrical energy transactions of said given node with neighbor nodes; b) tracking, by said computer system operatively connected, physically or wirelessly, with energy controllers located in said neighbor nodes of the given node, information about the neighbor nodes, said information including an amount of electrical energy flowing through each neighbor node and electrical energy transactions of each neighbor node with their corresponding neighbor nodes; and c) determining, by the computer system, a reliability estimation of the given node by using the tracked information of the given node and the tracked information of the neighbor nodes of the given node and by computing a reliability vector. In particular, the reliability vector is computed to comprise two components, a first component relating to quality of hardware elements used in the given node and a second component relating to use made of the electrical energy by the given node.

In an embodiment, the information tracked in steps a) and b) is stored in a database associated with the computer system before step c) being executed. Moreover, steps a) to c) are preferably executed every certain configurable period of time, e.g. every hour, every 8 hours, every day, etc. providing reliability estimation historical data record which can also be stored in said database associated with the computer system.

According to the proposed method, the one or more devices may further include electrical energy generation elements and/or electrical energy storage elements. The first component may include quality of wiring of the given node, a state-of-health indication of the electrical energy storage elements and/or quality of low reactances introduced by the electrical energy loads, and the second component may include electrical energy consumption made by the given node, tampering and/or costs of the given node for providing and/or receiving electrical energy.

In an embodiment, the computer system, further reports to the energy controller located in the given node a result of said reliability estimation historical data record. In addition, the computer system can further transmit to some or all of the neighbor nodes of the given node the computed reliability vector together with electrical energy performance data of said some or all neighbor nodes. Preferably, the transmission is performed using resilient to subversion communication protocols.

Moreover, in an embodiment, the computer system further compares the computed reliability vector with a threshold. In case the computed reliability vector is above the threshold (or in some embodiments equal to the threshold) the given node is designated as unreliable. In this case, the neighbor nodes can apply different policies to determine how further electrical energy transactions with the given node will be done in the future. Likewise, the computer system may disconnect the given node from the energy network and automatically rearrange a new electrical energy distribution topology of the energy network. Also, the computer system may send an alarm to the given node, and optionally to the neighbor nodes of the given node, so the node/nodes can act quickly to replace equipment.

Embodiments of the present invention also provide according to another aspect a system configured to perform the method embodiment steps and operations summarized above and disclosed in detail below.

In particular, the proposed system has a plurality of connected nodes of an energy network adapted and configured to distribute energy between them, preferably electrical energy, and each comprising one or more devices including energy loads, among others. Moreover, the proposed system also includes a plurality of energy controllers and a computer system operatively connected with the plurality of energy controller, either physically or wirelessly. Each energy controller is located in a node of the plurality of nodes and each energy controller is adapted and configured to provide information about the node in which they are located, said information including an amount of electrical energy flowing through the node and electrical energy transactions with neighbor nodes. The computer system is configured to determine a reliability estimation of a given node of the plurality of nodes by tracking the information of the given node and the information of the neighbor nodes of the given node and by computing a reliability vector comprising two components, a first component relating to quality of hardware elements used in the given node and a second component relating to use made of the electrical energy by the given node.

The proposed system may further include a database associated with the computer system configured to at least store the tracked information of the given node and of the neighbor nodes of the given node.

In the proposed system, the loads may include lighting systems and/or appliances including televisions, radios, kitchen appliances, etc. and refrigerators and/or heating equipment, among others. In addition, in the proposed system, the one or more devices may further include electrical energy generation elements such as solar panels, wind turbines, diesel generation systems, geothermal systems, a human-powered crank generator, etc. and/or electrical energy storage elements such as batteries or capacitors.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

Present invention addresses the issue of monitoring network components and users efficiently in a peer-to-peer energy network, particularly when the network infrastructure is purchased/leased, installed, configured, and maintained by the users of the energy network rather than a central utility. The invention is flexible to accommodate multiple use cases for reliability estimation and mitigations, from payments, to theft, to poorly maintained equipment. Conventional systems are centralized and cannot act locally as is needed for a distributed system.

### Brief Description of the Drawings

The previous and other advantages and features will be more fully understood from the following detailed description of embodiments, with reference to the attached drawings, which must be considered in an illustrative and non-limiting manner, in which:
Fig. 1 is a flow chart illustrating an embodiment of a method for reliability evaluation of nodes in a peer-to-peer distributed energy network.
Fig. 2 is a schematic illustration of another embodiment of the proposed method
Fig. 3 schematically illustrates how the determined reliability estimation for a given node can be shared with neighbours.
Fig. 4 is a schematic illustration of another embodiment of the proposed method. In this case, any initiation of mitigation is fed back into the reliability estimation process to re-compute the behaviour of an unreliable node.
Fig. 5 schematically illustrates an example embodiment of the present invention, specifically to detect theft.

### Detailed Description of the Invention and of Preferred Embodiments

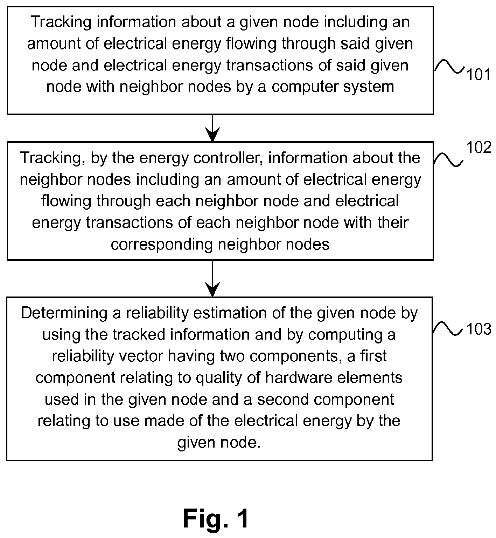

Fig. 1 illustrates an embodiment of the proposed method for reliability evaluation of nodes in a peer-to-peer distributed energy network, said energy network being adapted for the distribution of electrical energy and comprising a plurality of nodes (e.g. a home, among others). According to the embodiment of Fig. 1, a computer system including one or more processors tracks, step 101, information about a given node of the plurality of nodes of the energy network, said information including an amount of electrical energy flowing through said given node and electrical energy transactions of said given node with neighbor nodes and tracks, at step 102, information about the neighbor nodes of the given node, said information including an amount of electrical energy flowing through each neighbor node and electrical energy transactions of each neighbor node with their corresponding neighbor nodes. Then, step 103, the computer system with the tracked information determines a reliability estimation of the given node by computing a reliability vector having two components, a first component relating to quality of hardware elements used in the given node and a second component relating to use made of the electrical energy by the given node.

To perform the tracking of the information, the computer system is operatively connected, either physically or wirelessly, with energy controllers (e.g. digital energy routers) located in each of the nodes of the plurality of nodes of the energy network.

According to the present invention, the basic configuration of the nodes of the energy network comprises one or more devices including only electrical energy loads (e.g. home appliances such as a television or a microwave, among others, or lights or any type of refrigeration system). In more complex configurations of the nodes, the one or more devices may also include electrical energy generation elements (e.g. solar panels, wind turbines, diesel generation systems, etc.) and electrical energy storage elements (e.g. batteries and/or capacitors).

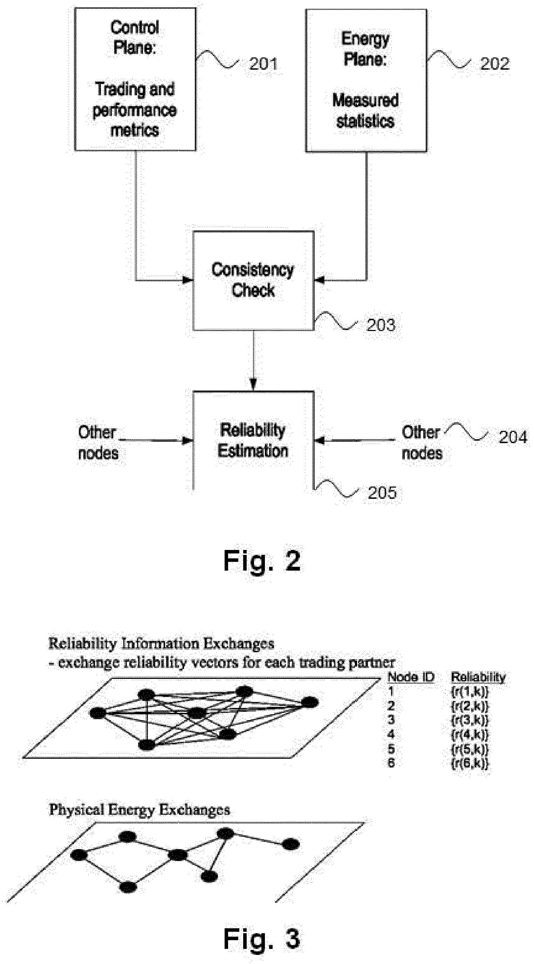

Fig. 2 illustrates another embodiment of the proposed method. As can be seen in the figure, the method compares statistics compiled from measurements of electrical energy transferred in an energy plane of the nodes of such energy network with that messages exchanged in a control plane of the nodes.

Reliability of the energy network can be divided into two parts: physical infrastructure and user behavior reliability (payment, consumption, tampering, etc.).

There are several ways to configure the basic system to detect anomalous behavior. Each measures the reliability of a particular node with respect to a specific capability (e.g. equipment maintenance, payment, etc.). Present invention uses a combination of the messages received from other neighbor nodes and the actual experience with a given node to calculate an estimate of that node's reliability. The reliability vector is defined that has two major components: one relating to the quality of the used hardware elements, for instance quality of wiring, of the state-of-health of secondary batteries (if the devices included in the node besides including electrical energy loads also include electrical energy storage elements), of low reactances introduced by electrical energy loads owned or present at that given node. The second major component would be the analysis relating the use of the given node, so as to discard any tampering or wrong intent by that given node.

The determined reliability estimation can be binary (i.e. reliable or unreliable) or on a sliding scale (discrete or continuous). The reliability metric measures how closely the actual trades observed match what was promised or negotiated. The computer system may also tracks the historical data to determine if such activity is typical and may require some notification to the given node or higher authority and potential mitigation.

The proposed system includes both hardware and software sensors to create the statistics with which to make the reliability estimates. In addition, a node can actively ping/probe neighbor nodes to gain better understanding of reactions in different circumstances, when needed. The computer system can also receive inputs from the state-of-health of batteries, wires from several neighbor nodes, etc.

In addition, the determined reliability estimation of a given node, as well as performance data can be shared with the neighbors to form a richer picture of a node's behavior and reliability (see Fig. 3).

The protocols used to share and combine such information are preferably designed so as to be resilient to subversion from a malicious node who may try to make a good node appear bad or a bad node appear good. This can include resilience against collusion of malicious nodes or other entities.

After a given node has been designated as unreliable (which could be a result of a multi-level variable passing a threshold), the neighbor nodes in the energy network need to determine if and how to mitigate that given node. The particular reaction, according to an embodiment, is defined by a policy that can be different at different nodes. Possible reactions range from continuing to monitor performance and increasing active probing to shutting down the port to which the node is connected, to sending a message or creating a visual alert to a user or administrator. The choice depends on personal preferences, perhaps where a particular node is in the network (e.g. if a node is at the very edge with only one connection to the network, it will not want to disconnect even if its neighbor is unreliable, but if it has many connections, it may disconnect earlier). A node may also choose to reduce its trading with an unreliable node and not cut it off completely. How to make these decisions is defined by a policy engine running at each node of the energy network.

Once an emergency situation arises, the computer system will act to disconnect the faulty node(s) from the energy network, and automatically rearrange its distribution topology. Additionally, through its communications channels, it can send an alarm to the node in questions, and also to the neighbouring ones, so that they can act quickly to replace the equipment.

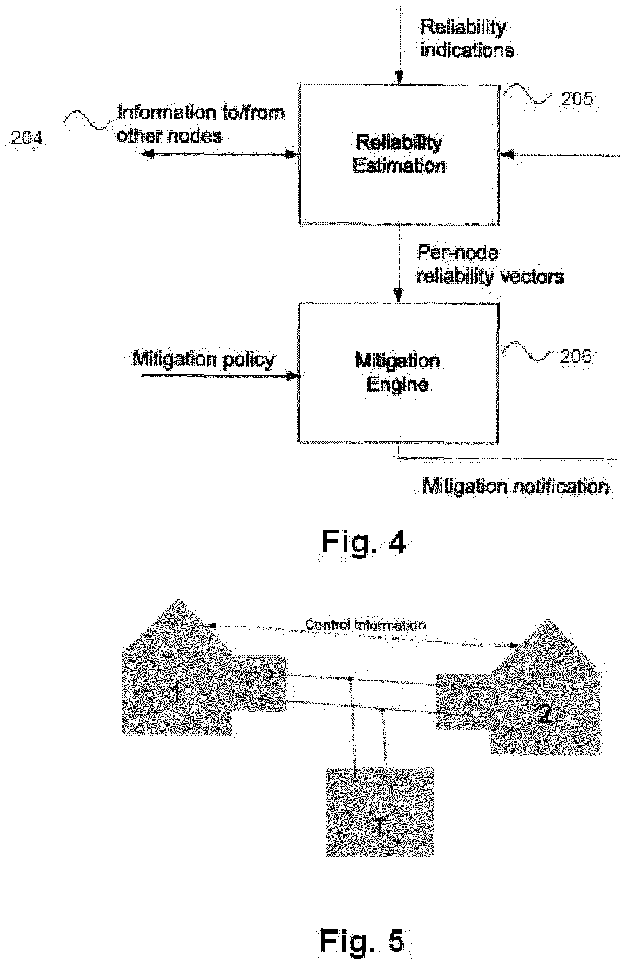

Any initiation of mitigation performed by a node is fed back, see Fig. 4, into the reliability estimation process to re-baseline the expected behavior of a mitigated node; this information is also shared with the neighbor networked nodes if relevant.

If a node improves its reliability, there are multiple ways it can be returned to regular status in the energy network. If the node has not been disconnected, and is still interacting in a manner that enables the computer system to calculate reliability estimates, it can naturally increase its reliability score as seen by others in the network. It may also send a message in the control plane to request resumption of interactions to enable a natural increase in reliability score. Alternatively, a manual override may be implemented in which the owner of the disconnected node requests other owner reconnect the disconnected node.

Following, four particular embodiments of the invention are detailed.
1) Equipment upkeep: Different users may be more or less diligent with upkeep and maintenance of equipment in their homes. This can result in wires becoming disconnected or poorly connected for periods of time, faults or short circuits, wires being cut by mistake, dirt on solar panels, poor battery connections, among others. The effect may be that when nodes interact for trading electrical energy, the amount contracted to exchange is not completely fulfilled due to excessive losses on the link, intermittent connection preventing all the electrical energy from being transferred, lack of availability of contracted electrical energy because predicted generation (or storage) was much greater than actually generated (or stored), or other reasons. In such situations, a trading partner will experience consistent mismatches in what was contracted and what was received. Depending on the sensors that are available, the partner may be able to diagnose the cause for the mismatch. The trading partner adjusts its reliability vector for the unreliable node accordingly and also exchanges information on its experiences with other nodes in the network. Those nodes are then able to adjust their reliability vectors and may be able to determine the cause for the problems with greater accuracy. The nodes may also notify the unreliable node (and potentially the owner) of the decreased reliability designation and any diagnostic information to enable the unreliable node to correct the problem.

One potential configuration consists of a messaging system that uses a separate medium than the energy transfer (e.g. wireless communications to exchange control information). One system owner is neglectful of his equipment such that wires from that node to others become loose, and some disconnect. In this situation, the control system reports to trading partners that the node has energy available to trade, but because wires are disconnected, no electrical energy can actually flow to the trading partners. The partners that have contracted to receive energy lower their reliability estimate of the faulty node and share this information with other nodes in the energy network so they do not make a contract that will not be fulfilled. Also, through the control network, the nodes who have not received their contracted electrical energy notify the faulty node of the problem.
2) Theft: All nodes may be reliable, but someone may tap off of a line connecting two nodes. In this case, each of the nodes will detect discrepancies between predicted and actual performance of a specific link. Depending on the equipment installed at each location, they may be able to determine that an extra connection has been made off the link between them; they may even be able to determine the location of the tap. Regardless, initially each will reduce its reliability estimate of the other according to its local statistics. Since the cause is isolated to a specific link, other nodes in the network will not identify either of the two affected nodes as unreliable (at least not with the same or similar symptoms). Through exchanging reliability information with the other network nodes, the two affected nodes can determine or verify that the problem is on their common link.

Fig. 5 illustrates an example of the above. Consider two homes connected by wires, and a third node (labeled "T" in the figure below) that taps electrical energy off of the wires without paying for the electricity it uses. The thief may slowly charge a battery to try to remain undetected. But before the thief connected to the wires between the homes, the two homes have exchanged sufficient amounts of electrical energy that they have accurately computed the resistance of the wires connecting them and therefore have a good estimate of the losses to expect when a contracted amount of electrical energy is sent over the wires. After the thief connects to the wires, though, the homes observe more loss than expected. The discrepancy between what is expected given past measurements and the observed losses causes the nodes to sound an alert that losses have increased, and may suggest that someone is stealing electrical energy.
3) Incorrect wiring: In extremely low voltage systems (i.e. 48 V and below), the electrical energy is safe for people to touch. But at higher voltages, there are safety concerns and incorrect wiring can cause fires or electric shocks. Such problems may only occur at higher currents running through the wires, which will correspond to peak usage times, and not occur often. Yet, indicators of problematic wiring can be detected at lower currents in order to sound an alarm and appropriate mitigation (such as disabling a link). These indicators make use of the same voltage and current sensors as described here.

Unlike in an alternating current (AC) system, in a direct current (DC) system, one wire in a pair connecting two nodes is always the high voltage (hot) and the other is always low (cold or ground). If the wires connecting two nodes are connected incorrectly, such that the hot terminal from one node is connected to the cold terminal of the other, and vice versa, problems can occur. If the power is being transferred to a purely resistive load that does not care about polarity, then there is no problem. But, if the load is something like a battery that is being charged, polarity matters and problems can occur, from overloading the wires and causing a fault, to potentially exploding the battery. However, with current sensors on the wires, the system will notice that on one of the nodes, current is flowing in the wrong direction. In such a case, the receiving node can prevent anything that requires the right polarity from being power and can also sound an alert that the wires are connected incorrectly.
4) Payment: While most of the use cases involve comparing actual electrical energy transferred with the amount contracted, present invention can also integrate the payment system into the reliability estimation implementation. In this case, the node tracks timeliness of payments made for electrical energy that has been traded. If a user is consistently late, or does not pay the full amount due, that's user's reliability with respect to payments will drop. And that reliability can be shared among the other network nodes. In such a situation, the system may be configured to require the unreliable paying user to prepay for electrical energy, or to set limits on the amount that user may contract at any given time. It can also allow the other network nodes to compare contracted amounts to ensure the total amount contracted falls below the set limit.

While the foregoing is directed to embodiments of the present invention, other and further embodiments of the invention may be devised without departing from the basic scope thereof. For example, other aspects may be implemented in hardware or software or in a combination of hardware and software.

The scope of the present invention is determined by the claims that follow.

## Claims

1. A reliability evaluation method of nodes in a peer-to-peer distributed energy network, wherein said energy network being adapted for the distribution of electrical energy and comprising a plurality of nodes, and wherein each node comprising one or more devices including electrical energy loads, the method comprising:
a) tracking, by a computer system operatively connected with an energy controller located in a given node of the energy network, information about the given node, said information including an amount of electrical energy flowing through said given node and electrical energy transactions of said given node with neighbor nodes;
b) tracking, by said computer system operatively connected with energy controllers located in said neighbor nodes of the given node, information about the neighbor nodes, said information including an amount of electrical energy flowing through each neighbor node and electrical energy transactions of each neighbor node with their corresponding neighbor nodes; and
c) determining, by the computer system, a reliability estimation of the given node by using the tracked information of the given node and the tracked information of the neighbor nodes of the given node and by computing a reliability vector, wherein the computed reliability vector comprising two components, a first component relating to quality of hardware elements used in the given node and a second component relating to use made of the electrical energy by the given node.

2. The method of claim 1, wherein the information tracked in steps a) and b) being stored in a database associated with the computer system before step c) being executed.

3. The method of claim 1, wherein steps a) to c) being executed every certain configurable period of time providing a reliability estimation historical data record which is stored in a database associated with the computer system.

4. The method of claim 3, further comprising reporting, by the computer system, to the energy controller located in the given node a result of said reliability estimation historical data record.

5. The method of claim 1, further comprising transmitting, by the computer system, to some or all of the neighbor nodes of the given node the computed reliability vector together with electrical energy performance data of said some or all neighbor nodes.

6. The method of claim 5, wherein said transmission being performed using resilient to subversion communication protocols.

7. The method of claim 1, further comprising comparing the computed reliability vector with a threshold, the method further comprising designating the given node as unreliable if the computed reliability vector being above the threshold.

8. The method of claim 7, further comprising applying, by the neighbor nodes of the given node, a policy determining how further electrical energy transactions with the given node will be done in future periods of time.

9. The method of claim 7, further comprising disconnecting, by the computer system, the given node from the energy network and automatically rearranging an electrical energy distribution topology of the energy network.

10. The method of claim 7, further comprising sending, by the computer system, an alarm to the given node, and optionally to the neighbor nodes of the given node.

11. The method of claim 1, wherein the one or more devices further includes electrical energy generation elements and/or electrical energy storage elements, and wherein the first component includes at least one of: quality of wiring of the given node, a state-of-health indication of the electrical energy storage elements and/or quality of low reactances introduced by the electrical energy loads, and wherein the second component includes electrical energy consumption made by the given node, tampering and/or costs of the given node for providing and/or receiving electrical energy.

12. A system for reliability evaluation of nodes in a peer-to-peer distributed energy network, the system comprising:
a plurality of nodes of an energy network, wherein said energy network being configured and adapted for the distribution of electrical energy and wherein each of said plurality of nodes comprising and one or more devices including electrical energy loads;
a plurality of energy controllers, wherein each energy controller being located in a node of the plurality of nodes and each energy controller being adapted and configured to provide information about the node in which they are located, said information including an amount of electrical energy flowing through the node and electrical energy transactions with neighbor nodes; and
a computer system operatively connected with the plurality of energy controllers, wherein the computer system being configured to determine a reliability estimation of a given node of the plurality of nodes by tracking the information of the given node and the information of the neighbor nodes of the given node and by computing a reliability vector comprising two components, a first component relating to quality of hardware elements used in the given node and a second component relating to use made of the electrical energy by the given node.

13. The system of claim 12, further comprising a database associated with the computer system configured to at least store the tracked information of the given node and of the neighbor nodes of the given node.

14. The system of claim 12 or 13, wherein the one or more devices further includes electrical energy generation elements and/or electrical energy storage elements, and wherein the first component includes at least one of quality of wiring of the given node, a state-of-health indication of the electrical energy storage elements and/or quality of low reactances introduced by the electrical energy loads, and wherein the second component includes electrical energy consumption made by the given node, tampering and/or costs of the given node for providing and/or receiving electrical energy.

15. A non-transitory computer readable medium comprising code instructions that when executed in at least one processor of a computer system implement the method according to claim 1.
